# EUROPÄISCHE PATENTANMELDUNG

(11) **EP 2 977 648 A2**
(43) Veröffentlichungstag der Anmeldung: **27.01.2016**
(21) Anmeldenummer: 15167955.2
(22) Anmeldetag: 18.05.2015
(51) Int. Cl.: F16H 59/40, F16H 61/02

(54) **VERFAHREN UND VORRICHTUNG ZUR ERKENNUNG EINES ÜBERSETZUNGSVERHÄLTNISSES AN EINEM FAHRZEUG**

(30) Priorität: 21.07.2014 DE 102014214085
(71) Anmelder: ROBERT BOSCH GMBH, 70442 Stuttgart (DE)
(72) Erfinder: Weissert, Mario, 72766 Reutlingen (DE)

(57) **Zusammenfassung**

Mit der vorliegenden Erfindung wird ein Verfahren sowie eine Vorrichtung beansprucht, die ein Übersetzungsverhältnis zwischen einem Antriebsmittel und einem Abtriebsmittel bildet, welche an einem Fahrzeug mit einer Gangschaltung bzw. einem Getriebe vorgesehen sind und mittels eine Übertragungsmittels verbunden sind. Hierzu wird eine erste Drehzahlgröße, die die Drehzahl des Antriebsmittels, und eine zweite Drehzahlgröße, die die Drehzahl des Abtriebsmittels ins Verhältnis gesetzt. Das so gebildete Verhältnis stellt die Übertragung der Antriebsdrehzahl auf die Abtriebsdrehzahl dar und ist somit in Verbindung mit der Antriebskraft ein Maß für die Fortbewegung.

## Beschreibung

Die Erfindung betrifft ein Verfahren und eine Vorrichtung zur Erkennung und Auswertung eines Übersetzungsverhältnisses an einer Gangschaltung an einem Fahrzeug.

### Stand der Technik

Allgemein erfordert der Antrieb eines Fahrzeugs eine Übertragung der Antriebskraft auf ein Abtriebsmittel, um den Vortrieb des Fahrzeugs zu bewerkstelligen. Um eine Variation des Antriebs zu erhalten, ist neben einer Anpassung der Antriebskraft auch eine Veränderung des Übertragungsverhältnisses möglich, beispielsweise mittels einer Gangschaltung oder allgemein einem Getriebe.

Für eine effiziente Kombination aus Antrieb, z.B. in Form eines Motors in einem Kraftfahrzeug oder an einem elektrisch angetriebenen Fahrrad, und Gangschaltung bzw. Getriebe ist es jedoch notwendig, den aktuellen Gang sowie die weiteren möglichen Gangpositionen und somit die Übertragungsverhältnisse zu kennen. Eine Möglichkeit besteht dabei darin, die Gangpositionen zu der verbauten Gangschaltung in einem Speicher für die Ansteuerung des Motors und/oder der Gangschaltung abzulegen.

Während automatische Gangschaltungen bei Kraftfahrzeugen schon seit längerem bekannt sind, werden diese bei Fahrrädern erst seit der Einführung der Elektrofahrräder für den breiten Massenmarkt interessanter. Neben der erforderlichen Steuertechnik ist auch die Elektrifizierung bei derartigen Ebikes und Pedelecs einfacher zu realisieren. Da jedoch die Detektion des aktuell eingestellten Ganges weiterhin einen zusätzlichen und ggf. aufwändigen Sensor erfordert, sind derartige automatischen Gangschaltungen für Elektrofahrräder immer noch ein Nischenprodukt.

Durch eine einfacherer Erfassung der aktuellen Übersetzungsverhältnisse, die auch den Austausch einzelner Schaltungselemente berücksichtigt, kann mit der vorliegenden Erfindung eine günstigere automatische Schaltung für Fahrzeuge im Allgemeinen und für elektrifizierte Zweiräder und Fahrräder im Besonderen realisiert werden.

### Offenbarung der Erfindung

Mit der vorliegenden Erfindung wird ein Verfahren sowie eine Vorrichtung beansprucht, die ein Übersetzungsverhältnis zwischen einem Antriebsmittel und einem Abtriebsmittel bildet, welche an einem Fahrzeug mit einer Gangschaltung bzw. einem Getriebe vorgesehen sind und mittels eines Übertragungsmittels verbunden sind. Hierzu wird eine erste Drehzahlgröße, die die Drehzahl des Antriebsmittels, und eine zweite Drehzahlgröße, die die Drehzahl des Abtriebsmittels ins Verhältnis gesetzt. Das so gebildete Verhältnis stellt die Übertragung der Antriebsdrehzahl auf die Abtriebsdrehzahl dar und ist somit in Verbindung mit der Antriebskraft ein Maß für die Fortbewegung.

Durch die Erfassung der Drehzahlen kann auf einfache Weise das Übertragungsverhältnis gebildet bzw. erkannt werden. Weiterhin können die Übertragungsverhältnisse bzw. die zu diesen Übertragungsverhältnissen zugeordneten Schaltstufen/Schaltschwellen entsprechend charakterisiert bzw. erkannt werden.

Vorteilhafterweise werden die erste und die zweite Drehzahlgröße während einer vorbestimmten Zeitdauer erfasst, wobei die Erfassung sowohl zeitgleich als auch zeitversetzt stattfinden kann. Durch die Mittelwertbildung über einen vorbestimmten Zeitraum hinweg können einzelne Drehzahlspitzen nivelliert werden.

In einer Weiterbildung der Erfindung ist vorgesehen, dass die erfassten Übertragungsverhältnisse von einer Vielzahl von Erfassungen abgespeichert werden. Durch die Berücksichtigung von einer Vielzahl von Erfassungen der Drehzahlgrößen kann eine Häufigkeitsverteilung gebildet werden. Um jedoch eine Vergleichbarkeit der einzelnen Erfassungen zu erhalten, ist es notwendig, dass die Drehzahlgrößen jeweils während der gleichen Zeitbasis erfasst werden und/oder auf eine einheitliche Zeitbasis bezogen werden. Mittels der Auswertung der Vielzahl von Übertragungsverhältnissen kann so ein minimales und/oder maximales Übertragungsverhältnis während der Nutzung des Fahrzeugs ermittelt werden. Diese Minimal- und Maximalwerte können dann optional dazu genutzt werden, der Gangschaltung bestimmte Einstellungen, z.B. in Form von Gängen bzw. gewünschten und einstellbaren Übertragungsverhältnissen zuzuweisen und für Steuerungszwecke genutzt werden. Dies kann beispielsweise mittels einer linearen oder einer nichtlinearen Zuordnung erfolgen. Darüber hinaus stellen diese Min-/Max-Werte die Grenzen für die Schaltung dar, die für eine automatische Steuerung der Gangschaltung nicht unterschritten bzw. überschritten werden sollten.

Darüber hinaus kann auch vorgesehen sein, dass die Zuweisung der Gänge der Gangschaltung direkt anhand von charakteristischen Häufungen von kumulierten Übertragungsverhältnissen erfolgt. So ergeben sich beispielsweise bei der Verwendung einer gestuften Gangschaltung während des Betriebs des Fahrzeugs typische immer wieder verwendete Übertragungsverhältnisse, die als relative Häufungen in einer kumulierten Betrachtung hervortreten. Diese hervortretenden Übertragungsverhältnisse können dann bestimmten Gängen der Gangschaltung zugewiesen oder einfach (intern) durchnummeriert werden und für Ansteuerzwecke genutzt werden. So ist nach Auswertung der Häufigkeitsverteilung für das System ableitbar, welche Anzahl an bzw. in welchen Abständen sinnvoll wählbare Übersetzungsverhältnisse zur Verfügung stehen. Der Vorteil der erfindungsgemäßen Bildung von Übertragungsverhältnissen sowie deren Auswertung und Zuweisung von Gängen einer Gangschaltung liegt darin, dass die so ermittelten Informationen für den Betrieb des Fahrzeugs genutzt werden können. So kann basierend auf dem aktuell bestimmten Übertragungsverhältnis festgestellt werden, ob der gewählte Gang für den aktuellen Betrieb der effizienteste ist. Basierend auf diesen Informationen kann dem Fahrer ein insbesondere optischer, akustischer und/oder haptischer Hinweis bezüglich einer Schaltempfehlung in einen höheren oder niedrigeren Gang gegeben werden. Bei der Verwendung einer automatischen Schaltung kann zusätzlich oder optional auch eine sofortige Umsetzung mittels der Aktivierung der Gangschaltung erfolgen, so dass ein neues Übertragungsverhältnis am Antriebsmittel und am Abtriebsmittel eingestellt wird, das den aktuellen Fahrverhältnissen (oder auch dem Zustand des Motors, der Beladung des für den Motor zuständigen Energiespeichers oder des Fahrers in Form einer optimalen Trittfrequenz) Rechnung trägt.

Optional können für diese Ausgestaltung auch weitere Parameter erfasst werden, die den aktuellen oder zukünftigen Fahrbetrieb charakterisieren. So kann vorgesehen sein, die aktuelle oder noch zu befahrende Steigung zu berücksichtigen, um entweder dem Fahrer eine Schaltempfehlung zu geben oder direkt einen höheren oder niedrigeren Gang einzustellen. Ähnlich kann auch eine Überlastung des Motors zu einem Herunterschalten führen.

In einer Fortbildung der Erfindung kann auch vorgesehen sein, dass weitere Informationen über die am Fahrzeug verwendeten Komponenten zur Berücksichtigung vorliegen. So können beispielsweise Abnutzungen der Komponente bei der Schaltempfehlung oder der Einstellung verschiedener Gänge berücksichtigt werden. Derartige Abnutzungen können entweder direkt über entsprechende Sensoren erfasst oder mittels der beanspruchten Dauer und der hinterlegten mittleren Nutzungsdauer abgeleitet werden. So ist denkbar, dass bei der Anwendung der Erfindung im Rahmen eines Elektrofahrrads bei der Erkennung der Abnutzung eines bestimmten Ritzels und/oder Kettenblatts die Übersetzung unter Aussparung dieses Ritzels und/oder Kettenblattes erfolgt. Da bei einer (Ketten-)Schaltung eines Fahrrads die mittleren

Übersetzungsverhältnisse üblicherweise mehrfach vorkommen können, ist ein derartiges Ausweichen auf andere Einstellungen üblicherweise ohne Komforteinbußen möglich.

Darüber hinaus ist bei der Speicherung der kumulierten Häufigkeiten der Übertragungsverhältnisse auch eine statistische Auswertung durch den Fahrer möglich. So ist beispielsweise gerade im Fahrradsport eine derartige Auswertung in Verbindung mit zusätzlichen Kraftmessungen auch ohne die Verwendung eines separaten Motorantriebs für einige Anwendungen interessant.

Durch die selbstständige Einlernphase bei der Erfassung der Vielzahl von Übertragungsverhältnissen während des Betriebs des Fahrzeugs ist keine zusätzliche Eingabe und Abspeicherung von konkreten Daten über die verbaute Gangschaltung bzw. des verwendeten Getriebes notwendig. Im Falle eines Austauschs von Komponenten müsste lediglich der vorhandene Datensatz ergänzt werden, um eine vollständige Erfassung der Gänge zu erreichen. Alternativ kann auch der bestehende Datensatz gelöscht und durch neue Erfassungen aktualisiert werden.

Weiterhin kann durch die beanspruchte Methode selbstständig unterschieden werden, ob eine gestufte oder kontinuierliche Gangschaltung vorliegt.

Weitere Vorteile ergeben sich aus der nachfolgenden Beschreibung von Ausführungsbeispielen bzw. aus den abhängigen Patentansprüchen.

### Kurze Beschreibung der Zeichnungen

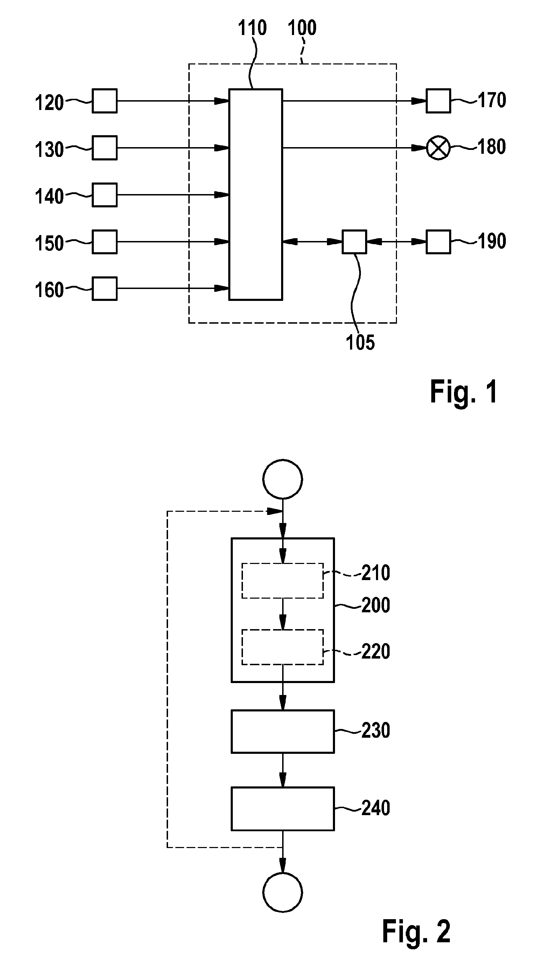

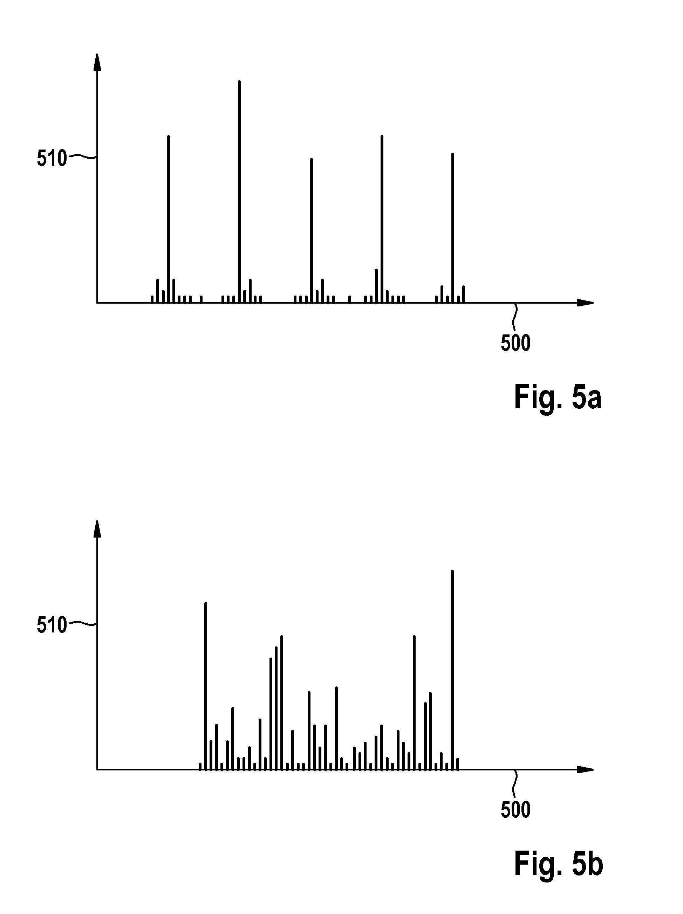

In der Figur 1 wird anhand eines Blockschaltbilds eine erste Ausführungsform einer erfindungsgemäßen Vorrichtung gezeigt. Die Figuren 2 bis 4 stellen mögliche Teilverfahren für die Erfindung dar. Mit den Figuren 5a und b werden typische kumulierte Häufigkeitsverteilungen der Übersetzungsverhältnisse für eine diskrete, d.h. gestufte sowie eine kontinuierliche Schaltung gezeigt, wie sie sich für die erfindungsgemäße Bestimmung der vorliegenden Gänge der Gangschaltung eines Fahrzeugs ergeben.

### Ausführungsbeispiel

In den folgenden Ausführungsbeispielen wird die vorliegende Erfindung in der Verwendung an einem Fahrrad beschrieben, insbesondere mit einem elektrischen Antrieb. Darüber hinaus sei jedoch klargestellt, dass die Erfindung sinngemäß auch an jedem anderen Fahrzeug verwendet werden kann, bei dem ein Antriebsmittel eine Drehzahl auf ein Abtriebsmittel zum Zwecke der Fortbewegung überträgt und bei dem eine Veränderung des Übertragungsverhältnisses mittels einer Gangschaltung oder eines Getriebes möglich ist.

Die nachfolgende Ausführung der Erfindung kann in einer Vorrichtung 100, z.B. einem Steuergerät oder einem Anzeigegerät für ein Fahrzeug, verwendet werden, wie es die Figur 1 zeigt. In dieser Vorrichtung 100 ist eine Steuer- und/oder Auswerteeinheit 110 vorgesehen, die die Drehzahlgrößen von entsprechenden Sensoren 120 und 130 an der Antriebswelle und der Abtriebsachse erfasst werden. Im Fall eines Elektrofahrrads entspricht dabei die Drehzahl an der Antriebswelle der Drehgeschwindigkeit des Kettenblatts, welche entweder durch den Fahrradfahrer selber durch die Muskelkraft betätigte Kurbelbewegung und/oder durch eine Zuschaltung eines Motors am Fahrrad (bei Verwendung eines Mittelmotorantriebs) erzeugt wird. Entsprechend repräsentiert die Drehzahl an der Abtriebsachse die Drehgeschwindigkeit am Hinterrad, welche durch die Übertragung der Drehung vom Kettenblatt, z.B. mittels einer Kette oder eines Riemens, erzeugt wird und den Vortrieb des Fahrrads bewirkt. Für den Fall, dass das Fahrrad einen Motor für den Hinterradantrieb aufweist, kann auch die Drehgeschwindigkeit zusätzlich durch diesen Motor erzeugt werden. Sowohl die Drehzahl des Motors, der auf die Tretkurbel wirkt als auch die Drehzahl es Motors, der auf das Hinterrad wirkt, können optional zusätzlich mit einem eigenen Sensor 140 erfasst und für die Auswertung berücksichtigt werden.

Um die erzeugte Antriebskraft möglichst effektiv für die Fortbewegung zu nutzen, kann je nach Umgebungsbedingung, z.B. aufgrund der Steigung, eine andere Übersetzung der Drehgeschwindigkeit von der Antriebs- auf die Abtriebsachse sinnvoll sein. Für diesen Zweck kann an der Antriebs- und/oder der Abtriebsachse eine Gangschaltung oder ein Getriebe vorgesehen sein.

Ausgehend von den erfassten Sensorgrößen kann die Steuereinheit 110 das vorliegende Übersetzungsverhältnis zwischen Antriebs- und Abtriebsachse bilden bzw. ermitteln und für eine Steuerung des Motors, der Gangschaltung bzw. eines Getriebes 170 oder eines sonstiges Aktuators verwenden. Optional kann auch vorgesehen sein, das Ergebnis der Auswertung der erfassten Sensorgrößen dem Fahrer auf einer Anzeige 180, z.B. einem Eingabe- und/oder Steuergerät für das Elektrofahrrad (HMI - Human Maschine Interface), mitzuteilen. Dabei kann neben der reinen Mitteilung über das aktuelle Übersetzungsverhältnis bzw. dem vorliegenden Gang auch eine Schaltempfehlung oder die zur Verfügung stehenden Gänge mitgeteilt werden. Weiterhin können Statistiken über die am häufig benutzten Gänge sowie evtl. auftretenden Abnutzungserscheinung mit einer Empfehlung zum Austausch angezeigt werden.

Zur Auswertung der Drehzahlgrößen der Antriebs- und Abtriebsachse, sowie gegebenenfalls des Motors können weitere Größen erfasst werden, die für die Ermittlung des Übersetzungsverhältnisses, der Zuweisung der Gänge und/oder der Umgebungs-/Fahr-/Betriebsbedingungen relevant sein könnten. Denkbar sind hier Sensoren 150, die das Drehmoment, die Steigung und/oder die Geschwindigkeit aber auch den Ladezustand der Batterie zum Betreiben des Motors erfassen. Eine weitere Eingabe 160 ermöglicht es der Auswerteeinheit 110, manuelle Eingaben des Fahrers zu berücksichtigen, z.B. ein Zurücksetzen der erfassten Daten.

Wie nachstehend weiter ausgeführt wird, erfordert das erfindungsgemäße Verfahren, welches in der Steuer- bzw. Auswerteeinheit 110 ablaufen kann, eine Vielzahl von erfassten Übersetzungsverhältnissen, um aus der so erhaltenen kumulierten Statistik die Gänge der verwendeten Gangschaltung bzw. des Getriebes abzuleiten. Zu diesem Zweck ist in der Vorrichtung 100 ein Speicher 105 vorgesehen, der sowohl mit der Auswerteeinheit 110 als auch über ein Interface mit einer externen Abfrage- und Eingabeeinheit 190 verbunden ist. Durch diese Abfrageeinheit kann beispielsweise bei einem Service die tatsächliche Benutzung der Gänge abgefragt werden. Eine derartige Information kann nicht nur für Statistikzwecke im Rahmen von sportlichen Betätigungen interessant sein, da hieraus auch die Abnutzung der Fahrradkomponenten abgeleitet werden kann. So ist beispielsweise denkbar, dass dadurch der gezielte Austausch eines Kettenblatts oder eines Ritzels angezeigt wird. Weiterhin liegt mit der Abspeicherung der Auswertung aus der Häufigkeitsverteilung der Übersetzungsverhältnisse auch eine Information darüber vor, wieviele Gänge bzw. Schaltstufen für die Ansteuerung der Fortbewegung des Fahrrads zur Verfügung stehen. Darüber hinaus ist ebenfalls bekannt, welche Übersetzungsverhältnisse tatsächlich sinnvoll einstellbar sind.

In den Figuren 2 bis 4 sind einzelne Algorithmen dargestellt, die jeweils Teilaspekte des Verfahrens der Erfindung darstellen, wie sie beispielsweise in der Auswerteeinheit 110 ablaufen können. Diese Teilaspekte werden zwar im Folgenden separat beschrieben, jedoch kann auch vorgesehen sein, dass alle Teile in einem einzelnen Algorithmus ablaufen können.

Nach dem Start des Algorithmus, z.B. aufgrund einer automatischen und/oder manuellen Initiierung des Fahrers (z.B. nach dem Wechsel einer Komponenten der Gangschaltung/des Getriebes oder bei Fahrtbeginn) gemäß der Figur 2 werden in einem Schritt 200 die Drehzahlen der Antriebsachse bzw. des Kettenblatts sowie der Abtriebsachse bzw. des Hinterrads erfasst. Optional kann bei dieser Erfassung auch die Drehzahl eines verwendeten Motors oder das erfasste Drehmoment zur Ableitung der entsprechenden Drehzahlgrößen verwendet werden. Alternativ zum Schritt 200 kann auch vorgesehen sein, dass die Erfassung der Drehzahl der Antriebsachse in einem Schritt 210 gesondert von der Erfassung der Drehzahl der Abtriebsachse in einem Schritt 220 erfolgen kann. Insgesamt ist jedoch darauf zu achten, dass die Erfassung der Drehzahlen zu vergleichbaren Ergebnissen führen sollte, d.h. während einer vergleichbaren Zeitdauer und zumindest mit keinem großen Zeitverzug, um Ungenauigkeiten zu erzeugen. Am vorteilhaftesten ist daher die (nahezu) zeitgleiche Aufnahme der Drehzahlen, wobei es für die Auswertung irrelevant ist, ob beide Aufnahmen über die gleiche Zeitdauer erfolgen, solange ein vergleichbarer Durchschnittswert ermittelt wird. Anschließend wird im Schritt 230 aus den so erhaltenen Drehzahlen ein aktuelles Übertragungsverhältnis von der Antriebs- zur Abtriebsachse ermittelt. Dieses aktuelle Übertragungsverhältnis kann für eine weitere Auswertung im Schritt 240 abgespeichert bzw. zu den bereits vorliegenden Daten aufsummiert werden, z.B. indem der Eintrag zu dem entsprechende festgestellten aktuellen Übertragungsverhältnis um +1 erhöht wird. Typische Darstellungen für solche kumulierten Statistiken, die die Häufigkeit der erfassten Übertragungsverhältnisse zeigen, sind in den Figuren 5a und b gezeigt. Nach diesem Schritt 240 kann das Verfahren beendet werden oder erneut mit der Erfassung der Drehzahlen im Schritt 200 weiterverfolgt werden.

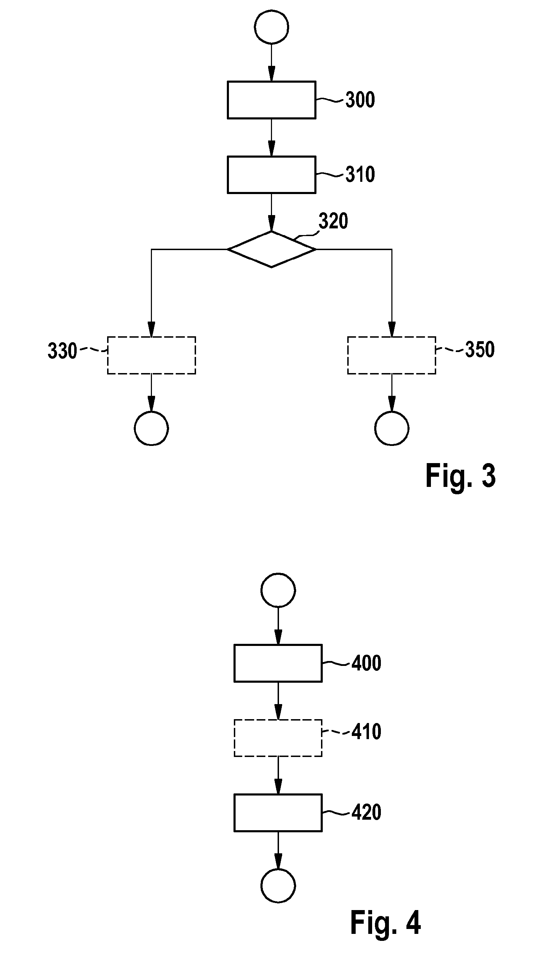

Mit dem Algorithmus gemäß der Figur 3 werden die gemäß dem vorstehendem Verfahren erfassten Übertragungsverhältnisse ausgewertet. Die Startbedingungen des Verfahrens können dabei die gleichen wie bei dem Verfahren gemäß der Figur 2 sein. Zur Auswertung wird nach dem Start des Verfahrens im Schritt 300 der Speicher bzw. die abgelegte Statistik zu den erfassten Übertragungsverhältnissen eingelesen. Anschließend wird im Schritt 310 anhand der Häufungen der erfassten Übertragungsverhältnisse das minimale bzw. maximale Übertragungsverhältnis bei der bisherigen Nutzung der Schaltung festgestellt und ggf. abgespeichert. Dabei kann, wie am Beispiel einer diskreten, d.h. gestuften Schaltung gemäß der Häufigkeitsverteilung in der Figur 5a die relative Häufigkeit herangezogen werden, um diese minimale bzw. maximale Übertragungsverhältnisse zu ermitteln. Eine reine Betrachtung der niedrigsten bzw. höchsten erfassten Werte ist dagegen üblicherweise nicht zielführend, da hierbei ggf. Messungenauigkeiten zu falschen Ergebnissen führen könnte. Im nachfolgenden Schritt 320 kann erkannt werden, ob es sich bei den erfassten Häufigkeitsverteilungen (Achse 510) der Übertragungsverhältnisse (Achse 500) um eine diskrete Schaltung, wie am Beispiel der Figur 5a verdeutlicht wird, oder um eine kontinuierliche Schaltung, wie am Beispiels der Figur 5b gezeigt wird, handelt. Der wesentliche Unterschied besteht dabei darin, dass bei einer diskreten Schaltung deutlichere relative Übertragungsverhältnisse aus der kumulierten Häufigkeit herausstechen und einzelnen Gängen direkt zugeordnet werden können. Bei einer kontinuierlichen Schaltung ist dagegen eher eine Häufung bei bevorzugten Einstellungen der Schaltung zu erkennen, die individuell unterschiedlich sein können. Durch die Möglichkeit einer kontinuierlichen Schaltung ist jedoch auch eine Zwischenübersetzung möglich, die bei der diskreten Schaltung gar nicht zur Verfügung steht. Wird in Schritt 320 somit eine kontinuierliche Schaltung erkannt, kann optional im Schritt 350 eine Abspeicherung dieser Information oder sogar eine Zuordnung von möglichen Übertragungsverhältnissen basierend auf den erfassten Min-/Max-Werten der Übertragungsverhältnisse erfolgen. Denkbar ist hier beispielsweise eine lineare Zuordnung über den gesamten Bereich der erfassten Übertragungsverhältnisse. Anschließend wird das Verfahren beendet.

Falls im Schritt 320 jedoch eine diskrete, d.h. gestufte Schaltung erkannt wird, bspw. indem die relativen Häufigkeiten über einen Schwellenwert hinaus reichen, kann in einem optionalen Schritt 330 eine Zuordnung der erkannten relativen Häufigkeiten zu Gängen der Gangschaltung erfolgen. Diese Zuordnung kann für weitere Auswertungen bzw. Steuerungen abgespeichert werden. Anschließend wird das Verfahren beendet.

In dem Algorithmus nach Figur 4 werden die erhobenen Daten bzw. die erkannten Gänge für Anzeige- und/oder Steuerungsfunktionen genutzt. Nach Beginn des Verfahrens wird in einem Schritt 400 die Zuordnung der Übersetzungsverhältnisse zu bestimmten Gängen eingelesen. Optional können auch die abgespeicherten Min-/Max-Werte eingelesen werden. Zusammen mit der Erfassung des aktuellen Übersetzungsverhältnisses kann so eine Information über den eingelegten Gang ermittelt werden. Diese Information kann mit weiteren Größen, z.B. Umgebungs-, Fahr- oder Betriebsgrößen, im Schritt 420 für eine reine Information des Fahrers, z.B. mittels optischer, akustischer und/oder haptischer Anzeige auf einem Bedienelement (HMI) oder für nachfolgende Auswertungen abgespeichert werden. Optional oder zusätzlich ist auch eine Verwendung der Information über den aktuellen Gang für eine Schaltempfehlung denkbar, ebenfalls in Verbindung mit den weiteren Größen, die beispielsweise mit entsprechenden Sensoren 150 oder anderen Eingaben erfasst werden. Diese Schaltempfehlung kann sowohl dem Fahrer angezeigt werden oder direkt/indirekt für die Ansteuerung des Motors, der Gangschaltung/des Getriebes oder eines anderen Aktuators am Fahrrad verwendet werden, um eine Veränderung des Übersetzungsverhältnisses zu erreichen. Hierzu ist jedoch erforderlich, dass der Steuerung die Information über der Übersetzung von Motor zu Antriebsachse vorliegt.

In einem weiteren optionalen Schritt kann zwischen den Schritten 400 und 420 ein weiterer Schritt 410 eingeführt werden. Dieser Schritt ist sinnvoll, wenn zuvor keine separate Abspeicherung der zugeordneten Gänge aufgrund der Häufigkeitsverteilung der Übersetzungsverhältnisse vorgenommen worden ist, die eingelesen werden konnte. In diesem Fall wird im Schritt 410 die Zuordnung aufgrund der zuvor erfassten Häufigkeitsverteilung vorgenommen bzw. im Fall einer kontinuierlichen Schaltung aufgrund der eingelesenen oder festgestellten Min-/Max-Werte, z.B. mit einer angenommenen linearen Verteilung.

Die mit dem vorstehend beschriebenen Verfahren bzw. Teilverfahren erkannten Gänge bzw. Schaltstufen stellen für eine Steuerung die einzigen Informationen für die wählbaren, stabilen und reproduzierbaren Übersetzungsverhältnisse dar, da gemäß der Erfindung nicht vorgesehen ist, dass die Informationen über die einstellbaren Gänge der Schaltung separat beim Einbau eingespeichert werden. Somit ermöglicht das erfindungsgenmäße Verfahren mittels eines selbstlernenden Algorithmus die Erfassung der möglichen Übersetzungsverhältnisse, wobei die einstellbaren Gänge durch die Auswertung der Statistik identifiziert und für Informations- und Steuerungsvorhaben verwendet werden können. Durch den Verzicht auf die separate Eingabe (manuell oder automatisch während eines Service-Vorgangs in einer Werkstatt) der Gänge bzw. der diesen zugeordneten Übersetzungsverhältnisse können auch individuelle Vorlieben bei der Einstellung der Übersetzungsverhältnisse erkannt werden.

Selbst bei der Nutzung nur einiger weniger Übersetzungen durch den Fahrer ermöglicht das erfindungsgemäße Verfahren die eindeutige Zuordnung der Gänge, falls nach einiger Zeit die bisher nicht genutzten Übersetzungsverhältnisse erfasst werden. In diesem Fall wird die kumulierte statistische Häufigkeitsverteilung einfach um diese neuen Übersetzungsverhältnisse erweitert und ggf. neue Min-/Max-Werte sowie zusätzliche Zuordnungen aufgrund der relativen Häufigkeiten ermittelt.

Prinzipiell kann auch beim Austausch einzelner Komponenten, wie beispielsweise einem Kettenblatt oder einem Ritzel die bestehende Häufigkeitsverteilung weiter benutzt werden, indem die neu erfassten Übersetzungsverhältnisse aufaddiert werden. Optional kann auch vorgesehen sein, dass ältere erfasste Übersetzungsverhältnisse mit einer Zeitkonstanten verbunden werden, wodurch diese im Laufe der Zeit eine geringere Gewichtung in der Statistik erhalten und ggf. gelöscht werden.

Wie auch beim Austausch der kompletten Schaltung gegen eine Schaltung mit z.B. anderen Übersetzungsverhältnissen ist natürlich auch beim Austausch einzelner Komponenten ein Neustart der Erhebung der Häufigkeitsverteilung der Übersetzungsverhältnisse zum Start eines neuen Selbstlernprozesses möglich. Dies kann beispielsweise manuell durch den Fahrer oder automatisch bei der Erkennung einer neuen Schaltung geschehen (z.B. durch Eintrag im Speicher bei Austausch oder entsprechender Sensor) oder dadurch, dass die statistische Auswertung erkennt, dass die Häufungen sich plötzlich verschieben.

Mittels der Schaltempfehlungen an den Fahrer kann auch verhindert werden, dass bestimmte Übersetzungsverhältnisse, die häufig benutzt werden, zu einem verhältnismäßig hohen Grad abnutzen. Dies kann dadurch erreicht werden, dass die Auswerteeinheit 110 diese häufige Nutzung erkennt und dem Fahrer eine etwas höhere oder niedere Übersetzung empfiehlt. Alternativ kann die Auswerteinheit 110 auch die Schaltung an der Antriebs- und an der Abtriebsachse entsprechend ansteuern, um jeweils eine Einstellung nach oben oder nach unten vorzunehmen. Dadurch könnte das gleiche Übersetzungsverhältnis bei unterschiedlichen Einstellungen erreicht werden.

Das vorstehende Verfahren kann auch bei einem Fahrrad ohne Elektroantrieb verwendet werden. Hierzu ist neben dem Geschwindigkeitssignal, welches üblicherweise als Magnetsensorsignal des Vorderrads erfasst wird, auch die Drehzahl der Tretkurbel notwendig. Somit lässt sich alleine mit einem weiteren Sensor, der bei vielen Sportfahrern bereits vorhanden ist, ebenfalls eine selbstlernende Erfassung von Übersetzungsverhältnissen beispielsweise im Rahmen eines Fahrradcomputers realisieren.

## Patentansprüche

1. Verfahren zur Bildung von Übersetzungsverhältnissen an einem Fahrzeug, welches wenigstens eine Gangschaltung und ein Antriebs- und ein Abtriebsmittel, welche mittels eines Übertragungsmittels verbunden sind, aufweist,
wobei zur Bildung des Übersetzungsverhältnisses die Schritte
• Erfassung (200, 210, 400) wenigstens einer die Drehzahl des Antriebsmittels repräsentierenden ersten Drehzahlgröße und
• Erfassung (200, 220, 400) wenigstens einer die Drehzahl des Abtriebsmittels repräsentierenden zweiten Drehzahlgröße und
• Bildung (230, 400) wenigstens eines Übersetzungsverhältnisses des Antriebs- zum Abtriebsmittels in Abhängigkeit von der ersten und zweiten Drehzahlgröße
aufweist.

2. Verfahren nach Anspruch 1, **dadurch gekennzeichnet, dass** die Erfassung (200, 210, 220, 400) der wenigstens einen ersten und zweiten Drehzahlgröße jeweils während einer vorbestimmten Zeitdauer erfolgt.

3. Verfahren nach einem der Ansprüche 1 oder 2, **dadurch gekennzeichnet, dass** in einem weiteren Schritt eine Vielzahl von Übersetzungsverhältnissen gebildet werden, wobei in Abhängigkeit von den insbesondere kumulierten relativen Häufigkeiten der gebildeten Übersetzungsverhältnisse ein minimales und/oder maximales Übersetzungsverhältnis abgeleitet wird (310), wobei eine Zuweisung (330, 350, 410) der Gänge der Gangschaltung des Fahrzeugs in Abhängigkeit von der den ermittelten minimalen und/oder maximalen Übersetzungsverhältnissen erfolgt.

4. Verfahren nach einem der Ansprüche 1 bis 3, **dadurch gekennzeichnet, dass** in einem weiteren Schritt eine Vielzahl von Übersetzungsverhältnissen gebildet werden, wobei eine Zuweisung (330, 350, 410) der Gänge der Gangschaltung des Fahrzeugs in Abhängigkeit von der insbesondere kumulierten relativen Häufigkeit der gebildeten Übersetzungsverhältnisse erfolgt.

5. Verfahren nach Anspruch 3, **dadurch gekennzeichnet, dass** in einem weiteren Schritt eine Vielzahl von Übersetzungsverhältnissen gebildet werden, wobei eine Zuweisung (350, 410) der Gänge des Fahrzeugs in Abhängigkeit von dem abgeleiteten minimalen und maximalen Übersetzungsverhältnis erfolgt, insbesondere in Form einer linearen Anpassung zwischen dem minimalen und maximalen Übersetzungsverhältnis.

6. Verfahren zur Erzeugen einer Schaltempfehlung einer Gangschaltung eines Fahrzeugs, welches wenigstens ein Antriebs- und ein Abtriebsmittel aufweist, welche mittels eines Übertragungsmittels verbunden sind, wobei wenigstens ein Übersetzungsverhältnis nach einem der Verfahren gemäß der Ansprüche 1 bis 5 gebildet (310, 400) wird, **dadurch gekennzeichnet, dass** in Abhängigkeit des aktuellen Übersetzungsverhältnisses eine Schaltempfehlung und/oder eine Änderung des Übersetzungsverhältnisses durch eine Aktivierung der Gangschaltung erzeugt (420) wird.

7. Vorrichtung (100) zum Betreiben eines Fahrzeugs, insbesondere eines Zweirads, wobei das Fahrzeug
• ein Antriebsmittel zum Antreiben des Fahrzeugs, insbesondere eine Tretlagerwelle, und
• ein über ein Übertragungsmittel mit dem Antriebsmittel verbundenes Abtriebsmittel, und
• eine mit dem Antriebsmittel und/oder dem Abtriebsmittel verbundene Gangschaltung, und
• eine Steuereinheit (110), insbesondere zur Ausführung eines Verfahrens nach einem der Ansprüche 1 bis 6, aufweist,
wobei die Steuereinheit (110) wenigstens
• eine die Drehzahl des Antriebsmittels repräsentierende erste Drehzahlgröße erfasst und
• eine die Drehzahl des Abtriebsmittels repräsentierende zweite Drehzahlgröße erfasst, und
• in Abhängigkeit von der ersten und der zweiten Drehzahlgröße ein aktuelles Übersetzungsverhältnis des Antriebs- zum Abtriebsmittels bildet (230, 400) und speichert (240, 420),
wobei die Steuereinheit in Abhängigkeit von dem aktuellen Übersetzungsverhältnis und von der kumulierten Häufigkeit der Übersetzungsverhältnisse eine Ganginformation über den mittels der Gangschaltung eingestellten aktuellen Gang des Fahrzeugs erzeugt.

8. Vorrichtung nach Anspruch 7, **dadurch gekennzeichnet, dass** die Steuereinheit (110) in Abhängigkeit der Ganginformation eine Schaltempfehlung erzeugt (420), wobei insbesondere vorgesehen ist, dass die Schaltempfehlung dem Fahrer auf einem Display (180) gezeigt wird.

9. Vorrichtung nach Anspruch 7 oder 8, **dadurch gekennzeichnet, dass** die Steuereinheit in Abhängigkeit der Ganginformation die Gangschaltung ansteuert, um eine Veränderung des Übersetzungsverhältnisses und/oder des Ganges zu erzeugen, insbesondere indem
• ein Motor des Fahrzeugs, welcher auf das Antriebsmittel wirkt, und/oder
• eine Schaltung (170) am Antriebs- und/oder Abtriebsmittel angesteuert wird.

10. Vorrichtung nach einem der Ansprüche 2 bis 9, **dadurch gekennzeichnet, dass** die Schaltempfehlung und/oder die Veränderung des Übersetzungsverhältnisses zusätzlich in Abhängigkeit von Nutzungsdaten der für den Antrieb verwendeten Komponenten erfolgt, insbesondere in Abhängigkeit von Abnutzungsinformationen der Komponenten.
